# EUROPEAN PATENT SPECIFICATION

(11) **EP 2 051 876 B1**
(45) Date of publication and mention of the grant of the patent: **18.05.2011**
(21) Application number: 07789071.3
(22) Date of filing: 26.07.2007
(51) Int. Cl.: B60N 2/28, B60R 22/10

(54) **ADVANCED SAFETY HARNESS FOR CHILD SEAT**
FORTSCHRITTLICHER SICHERHEITSGURT FÜR KINDERSITZ
HARNAIS DE SÉCURITÉ AVANCÉ POUR SIÈGE D'ENFANT

(30) Priority: 26.07.2006 GB 0614910
(43) Date of publication of application: 29.04.2009
(73) Proprietor: Britax Childcare Limited, Marlborough Wiltshire SN8 1AL (GB)
(72) Inventor: PITCHER, Mark Robert, Surrey KT4 7HB (GB); CARINE, David Shaun, Hampshire SP11 6DF (GB); DOWNIE, David Gardiner, Waterlooville PO7 8LH (GB); THIPPADU, Virasamy, Surrey KT22 9PG (GB)
(74) Representative: Bosch, Matthias
(86) International application number: PCT/GB2007/002859
(87) International publication number: WO 2008/012554

(56) References cited:
- EP-A- 0 295 838
- WO-A-2005/092677
- US-A- 4 762 364

## Description

The present invention concerns safety seat harnesses, and particularly though not exclusively child safety seat harnesses.

In this connection, child seats for babies and younger children tend to be provided with a harness arrangement for restraining the baby or child in the seat.

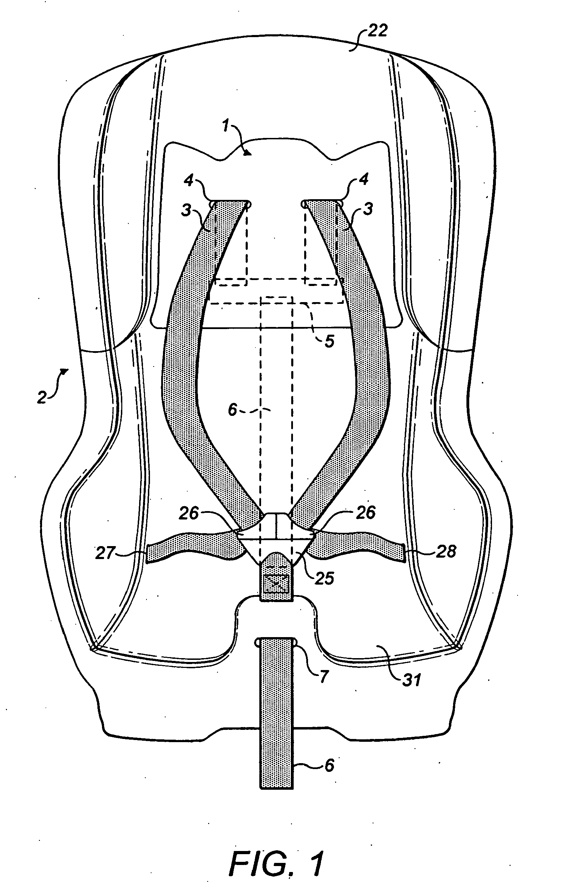

The routing of the harness straps has developed over time to try to optimize both safety and ease of use. In this connection, a typical harness 1 for a safety seat 2 is shown in Figure 1 and shows how shoulder straps 3 extend downwardly from upper apertures 4 in the seat, are conveyed and guided through a buckle and then diverge sideways at side portions 8 to attach with respective lower side portions 27, 28 of the seat.

At the upper end of the harness, the shoulder straps 3 pass through their respective apertures 4 to run down the back of the child seat back, where they engage with a cross member 5 (shown in phantom lines). This is in turn coupled to a strap 6 which runs further down the back of the seat and then under the seat to surface, through an aperture 7 having a catch, in the front 31 of the base of the seat.

A user such as a parent can pull on the free end of the strap 6 to draw the cross member 5 down, thereby pulling the shoulder straps and buckle into the seat to tighten the harness.

This arrangement has worked well and offers a good compromise between safety performance and ease of use.
A similar strap arrangement is known from US 4 762 364 A (corresponding to the preamble of each independent claim) which describes a child safety seat comprising a seat back, a seat base and a restraining strap configuration. The restraining strap configuration comprises an upper body restraining strap configuration and a lower body restraining strap configuration.

However, it has been found that there are disadvantages with this "running loop" type of routing, namely where the straps run directly from the shoulder area to the buckle and then to the strap side portions. In particular a problem has been identified whereby, because of its relatively low centre of mass, the occupant child's lower body will first try to move forward in the event of a sudden deceleration. As a result any slack in the shoulder straps will be drawn into the strap side portions as the lower part of the child tries to translate forward. When the extent of slack and flexibility in the shoulder strap is exhausted, a gap will have developed between the child's lower back and the safety seat.

Next the child's upper body will start to come into play and begin to tilt the child's upper body forward. Now any slack and flexibility in the straps will allow the child's upper body to move forward. As the child's upper body moves forward, the slack in the lower body straps will be taken up over the upper body and away from the lower body. As a result, the child will experience a rapid rocking motion, between the lower and upper body moving forward.

This is highly undesirable in that the child's head in particular is subjected to increased forward excursion owing to the late loading caused by the harness arrangement coupling the child to the safety seat.

An object of the present invention is therefore to try to alleviate the problems with such known harness arrangements.

According to an aspect of the present invention there is provided a seat for restraining a child, the child seat comprising:- a seat back; a seat base; and a restraining strap configuration, said restraining strap configuration comprising an upper body restraining strap configuration and a lower body restraining strap configuration; characterized in that the lower body restraining strap configuration has upper strap supply points on the seat back which are separate from upper strap supply points of the upper body restraining strap configuration. Being able to restrain the occupant's upper and lower body substantially separately in the event of an accident can dramatically reduce the occupant's forward displacement and significantly improve their kinematics in frontal, side, rear and oblique impacts.

Further features of the invention are disclosed in the dependent claims. The restraining strap configuration comprises a pair of straps extending from respective upper strap supply points on an upper portion of the seat back to a lower portion thereof, the straps passing around respective guide members provided on the seat back, the guide members acting as said upper strap supply points for said lower body restraining strap configuration. As such, with the present invention, one can benefit from using a single pair of straps as before, but in use they are routed so that they will function as if there are two independent restraint areas, namely an upper area and a lower area. That said, the upper and lower body restraining strap configurations may alternatively be kept completely separate from one another.

The pair of straps pass through respective buckle guide apertures in respective buckle connectors before being connected to the seat.

The guide members each comprises a pair of apertures in the seat back, for allowing each strap to pass from a front surface of the seat back to a rear surface of the seat back, and then back to a front surface of the seat back. The apertures are substantially vertically aligned and are respectively displaced slightly to the edges of the seat back.

An upper one of said pair of apertures comprises an anchoring point of said upper body restraining strap configuration and a lower one of said pair of apertures comprises a strap supply point of said lower body restraining strap configuration.

Said guide members each comprise a formation for deflecting their associated strap along a path away from a plane containing or being parallel with the seat back. Said guide members can each be wedge shaped. Said guide members each may have in cross-section an arcuate top profile for engaging the strap and a flat bottom profile for engaging the seat back. This dedicated top profile assists in allowing the strap to move through the guide member in order to install or removed an occupant, but to hold the strap in position in the event of a sudden deceleration.

Said guide member has an energy absorbing mechanism. This may comprise one or more deformable portions and these portions may have different deformation characteristics.

The guide member may have a friction coating offering smooth running at installation strap loads but restriction to strap transfer there-over at crash loads.

Each guide member top profile is a compound curve, formed of curves having greater and lesser curvatures, said curve of greater curvature (i.e formed form a circle of a smaller radius) being provided at or adjacent said supply point of said lower body restraining strap configuration. This configuration is provided to deal with the initial loading of the straps due to the momentum forces of the occupant.

Said straps cross between said upper body restraining strap configuration and said lower body restraining strap configuration, the straps conveniently crossing at a rear surface of said seat. In this way, should there be a side impact, as the child transitions sideways towards the direction of the side impact, it tightens the opposing shoulder strap thereby better controlling the upper torso from rolling towards the impact and affording improved head containment within the seat shell profile.

Rollers may be provided at said apertures. The use of rollers instead of or in addition to just apertures such as slots reduces friction, allowing the seat harness to self adjust during tightening to the size of the child occupant.

According to a further aspect of the present invention there is provided a harness configuration for a child seat, comprising a pair of harness straps, wherein each harness strap extends down from an upper strap supply point on said seat, and characterized in that each harness strap engages a guide member positioned part way down said seat back from said upper strap supply point, and wherein each strap extends further down the seat and engages with a buckle guide member provided in a buckle coupling, before extending and being coupled to said seat at or adjacent a seat base.

A chest clip may be provided for releasably coupling together straps within said upper body restraining strap configuration.

Furthermore, shaped shoulder pads may be provided within said upper body restraining strap configuration. These can afford an enhanced positioning and load distribution of the straps.

According to a further aspect of the present invention there is provided a seat harness configuration for a child seat, characterized in that it comprises: a pair of harness straps, each harness strap extending down from an upper strap supply point on said seat, a guide member positioned part way down said seat for engaging said straps, said guide member having an energy absorbing mechanism comprising a deformable member, said deformable member deforming to absorb energy on sufficient loading from said straps.

Said harness straps are guided to cross by said guide member. Said straps preferably cross at a rear surface of said seat.

According to a further aspect of the present invention, there is provided a method of installing a harness for a child seat, comprising:- feeding a harness strap from an upper supply point down the front of said child seat; guiding the strap through a guide member provided part way down the seat to form an upper restraining area for restraining an upper body area of an occupant; feeding the strap further down the seat through a buckle for going to the side of the seat to form a lower restraining area for restraining a lower body area of an occupant.

A pair of said harness straps are provided, said straps being guided by said guide member so as to cross.

An example of the present invention will now be described with reference to the accompanying drawings:- in which,

Figure 1 shows a known child seat harness routing;

Figure 2 shows a child seat harness routing of the present invention;

Figure 3 shows the seat of Figure 2 with an occupant installed;

Figure 4 shows a close up of a guide member for use in the present invention;

Figures 5 to 11 show alternative embodiments of guide member for use in the present invention; and

Figure 12 shows a further embodiment of the present invention.

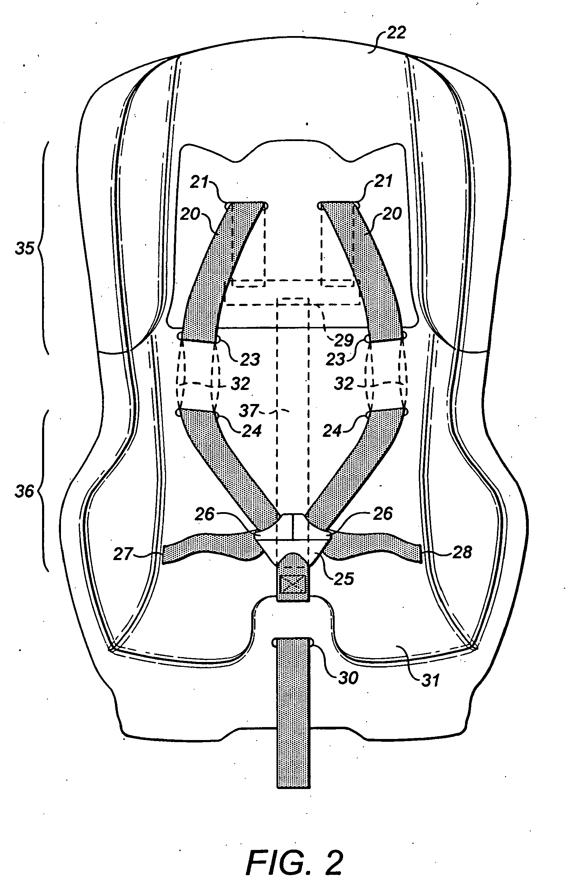

Figure 2 shows a seat harness routing of the present invention. In this respect, as with conventional child seat harnesses, straps 20 project from a pair of apertures 21 at a upper part of the seat back 22.

In contrast with known arrangements, the straps 20 then however return into the seat through apertures 23 and reemerge to the front of the seat through apertures 24. The straps next pass down to the buckle 25 where they pass through respective buckle guide apertures 26 to form a lower body restraining portion 36. They are then guided to respective sides 27, 28 of the seat where they are fixed.

As with known seat arrangements, the straps at the upper part of the seat back pass through apertures 21 through to the back of the seat where they extend downwardly to connect with a cross member 29 (shown in phantom lines).

This cross-member is coupled to a further strap or webbing 37 which passes further down the back of the seat, along its underside and up through an aperture 30 provided at the front of the top of the seat base 31.

The straps could however alternatively be independently connected to a retractor reel thereby eliminating the cross member 29, webbing 37 and aperture 30. The straps could moreover be connected to a drivable shaft for reeling in/tightening or releasing the straps.

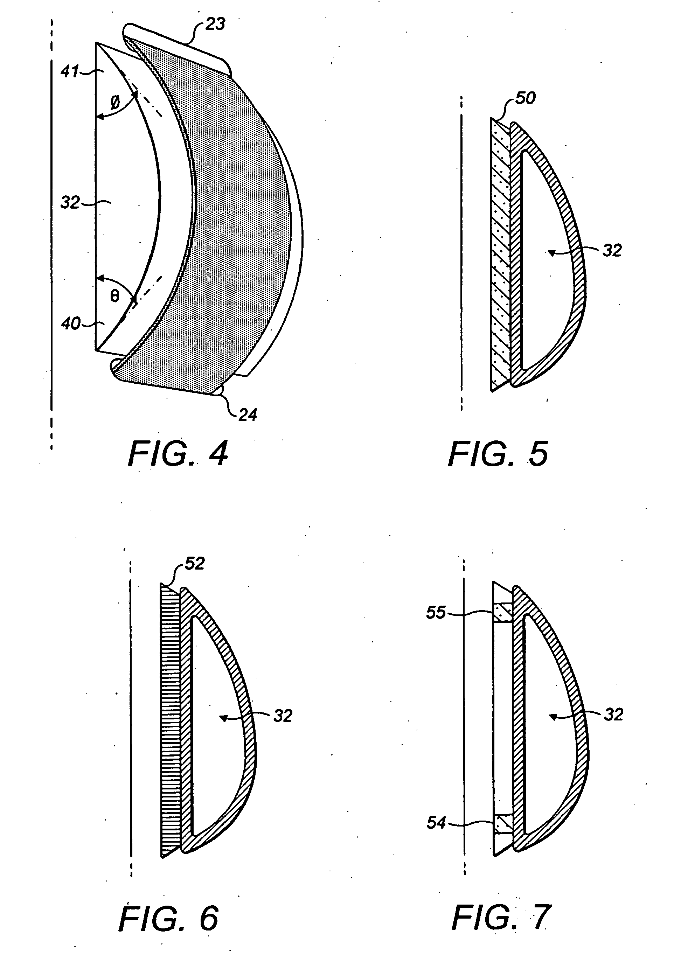

From Figure 4 it will be seen that guide members 32 are provided on the back of the seat back between the apertures 21 and 24. The respective straps 20 engage these members as they pass from the front of the seat to the rear of the seat and again out to the front of the seat. Of course, in an alternative embodiment, the straps 20 need not pass through to the back of the seat but may pass through suitable guide members provided on the front surface of the seat back.

The profile of the guide members 32 is configured such that the straps can be pulled through apertures 23 and 24 relatively easily when installing a child in order to create some slack on the strap. Moreover, the straps will also run through the apertures 23 and 24 relatively easily for tensioning of the harness.

However, in the event of a sudden deceleration of the vehicle, the profile of the members is such as to hold the straps in position, thereby substantially maintaining two independent restraining areas provided by the straps in portions 35 and 36 for upper and lower portions of the occupant. The guide members may have a friction coating offering smooth running at installation strap loads but restriction to strap transfer there-over at crash loads.

The members have an arcuate wedge shaped profile. As shown in Figure 4, the members have a flat bottom surface and a curved top surface. The curved top surface is relatively more inclined with respect to the flat bottom surface at a lower portion 40 thereof, compared with an upper portion 41. This arrangement facilitates movement of the strap through apertures 23, 24 for installing and removal of the occupant but hinders movement of the strap through the apertures in the event of a sudden deceleration.

In this respect, in the event of a sudden deceleration, the straps are pulled forward in the lower restraining area 36 due to the momentum of the occupant. The forces at play will mean that the straps are pulled relatively parallel with the surface of the seat base, namely in a forward direction of the vehicle. As such, the relatively inclined angle of the member 32 promotes holding of the strap around the member so that substantially the two independent restraining areas 35 and 36 are maintained. Angles ø and θ are substantially 25 and 40 degrees in this connection.

Hence, the path that the straps follow as a consequence of the member 32 dictates that, in the event of a sudden deceleration, the straps are held tightly around the members 32. Slippage of the straps about the member 32 in such a case is prevented or at least minimized.

However, the relatively mild inclination of the upper portion of member 32 facilitates the ability to lengthen the straps in the upper restraining area 35 for assisting in the installation of an occupant. In this regard, more gentle forces on the straps, particularly those aligned more with the inclination of the back of the seat such as a parent pulling upwardly on straps 20, will allow the straps to move past the members 32.

The member 32 can be provided with an energy absorbing mechanism, such as a crumple zone, so as to absorb and/or dissipate energy applied thereto from the straps in the event of a sudden deceleration.

Examples of such energy absorbing mechanisms are shown in Figures 5 to 11. As shown in Figure 5, the energy absorbing mechanism takes the form of deformable foam 50 provided between the flat bottom surface 51 of the guide member and the seat back. The energy absorbing mechanism may be a collapsible honeycomb insert 52 provided at the flat bottom surface of the guide member as shown in Figure 6.

As shown in Figure 7, the energy absorbing mechanism may comprise separate elements 54 and 55, having the same or different response characteristics to achieve the desired kinematics. Element 54 may, for example, comprise a pair of deformable foam blocks having different deformation characteristics from a pair of blocks making up element 55.

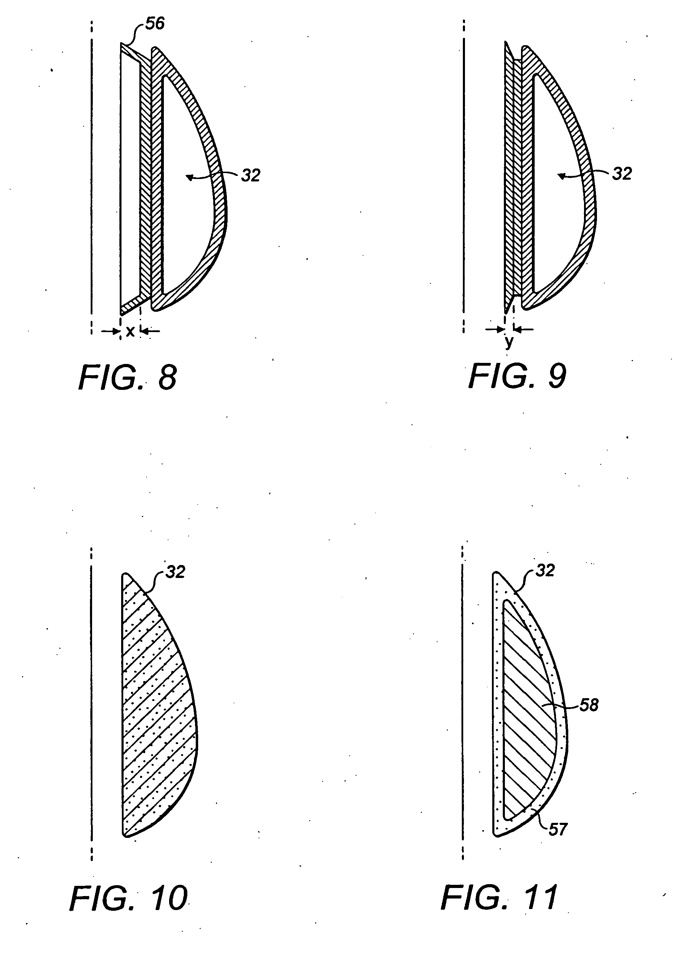

Figure 8 and 9 show an arrangement where the energy absorbing mechanism comprises a deformable plate 56 supporting the guide member 32, Figures 8 and 9 showing before and after accident configurations respectively.

Of course, the member 32 can itself be designed to be partially or completely deformable, Figure 10 showing a total deformable structure and Figure 11 showing a guide member 32 having a partially deformable outer region 57 and a relatively rigid inner region 58.

Although the member 32 is disclosed above as being a separate member, it can be provided as an integral formation in the seat back.

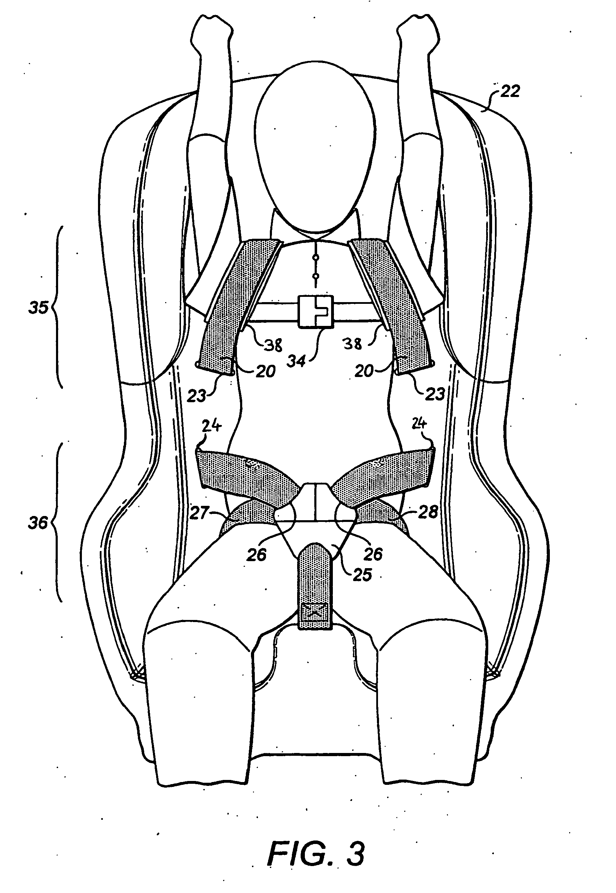

As shown in Figure 3, a chest clip may be provided between the straps 20 for releasably holding them together. The straps 20 may moreover be provided with shaped pads 38 for better positioning of the straps as they emerge from the apertures 21 across the child's shoulder and then route beneath the child's armpit to apertures 23. Whilst the chest clip may be provided independently between the straps 20 to releasably couple them together, the chest clip may, as shown, be incorporated into the shaped pad arrangement, and may even take the form of a harness jacket (not shown).

It will be understood that with the harness configuration of the present invention, the harness is divided into an upper body restraining portion and a lower body restraining portion. The upper body restraining portion holds the shoulders and the lower body restraining portion holds the lower abdomen, hips and upper legs. As discussed, in the event of a sudden deceleration, the upper and lower body restraining portions can act substantially independently to hold the occupant in place. It has been found that using this harness arrangement, there is typically a reduction of 30mm in lower body translation and 50 mm reduction in head displacement compared with a conventional harness system as shown in Figure 1, when evaluated on the same child seat product.

This is advantageous in reducing the displacement of the child from the child seat and in improving the child's kinematics in the event of a sudden deceleration or acceleration by allowing the earlier actuation of the restraint system thereby maximizing occupant ride down time to better dissipate forces with respect to the increased time base now available.

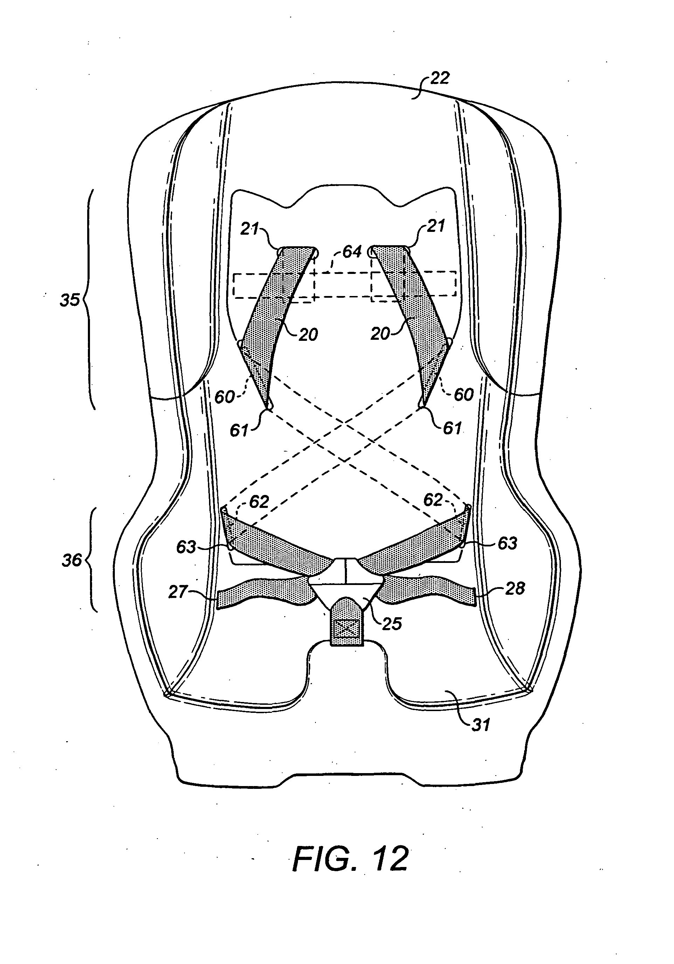

In Figure 12, a further embodiment of the invention is shown, where the harness straps 20 exit apertures 21 as before, but then pass around rollers 60 and through apertures 61 on passing to the rear of the seat. The straps then cross on the back of the seat before passing around rollers 62 and through apertures 63 to the front of the seat where they thread as before through the buckle apertures.

This has the positive effect in that in the event of a side impact, as the child transitions sideways towards the direction of the side impact, it tightens the opposing should strap 20 thereby better controlling the upper torso from rolling towards the impact and affording improved head containment within the seat shell profile.

The use of rollers instead of slots reduces friction allowing the seat harness to self adjust during tightening to the size of the child occupant.

Tightening and releasing of the strap may be affected by winding it on a roller shaft 64, which can be motorized.

## Claims

1. A seat for restraining a child or infant in a vehicle, the seat comprising:-
a seat back (22);
a seat base (31); and
a restraining strap configuration, said restraining strap configuration comprising an upper body restraining strap configuration (35) and a lower body restraining strap configuration (36);
**characterized in that** the lower body restraining strap configuration (36) has upper strap supply points (24) on the seat back (22) which are separate from upper strap supply points (21) of the upper body restraining strap configuration (35).

2. A seat according to claim 1, wherein the restraining strap configuration comprises a pair of straps (20) extending from respective upper strap supply points (21) on an upper portion of the seat back (22) to a lower portion thereof, the straps (20) passing around respective guide members (32) provided on the seat back (22), the guide members (32) acting as said upper strap supply points (24) for said lower body restraining strap configuration (36).

3. A seat according to claim 2, wherein the pair of straps (20) pass through respective guide apertures (26) in respective buckle connectors before being connected to the seat.

4. A seat according to claim 2 or 3, wherein the guide members (32) each comprises a pair of apertures (23, 24) in the seat back (22), for allowing each strap (20) to pass from a front surface of the seat back (22) to a rear surface of the seat back (22), and then back to a front surface of the seat back (22).

5. A seat according to claim 4, wherein an upper one (23) of said pair of apertures (23, 24) comprises an anchoring point of said upper body restraining strap configuration (35) and a lower one (24) of said pair of apertures (23, 24) comprises a strap supply point of said lower body restraining strap configuration (36).

6. A seat according to any one of claims 2 to 5, wherein said guide members (32) each comprise a formation for deflecting their associated strap along a path away from a plane containing or being parallel to the seat back (22).

7. A seat according to any one of claims 2 to 6, wherein said guide members (32) each are wedge shaped.

8. A seat according to any one of claims 2 to 7, wherein said guide members (32) each have in cross-section an arcuate top profile and a flat bottom profile.

9. A seat according to claim 8, wherein each guide member (32) top profile is a compound curve, formed of curves having greater (40) and lesser (41) curvatures, said curve of greater curvature (40) being orientated at or adjacent said strap supply point (24) of said lower body restraining strap configuration (36).

10. A seat according to any one of claims 2 to 9, wherein said guide member (32) has an energy absorbing mechanism.

11. A seat according to claim 10, wherein said energy absorbing mechanism comprises one or more deformable portions (50, 52, 54, 55, 56, 57).

12. A seat according to claim 10 or 11, wherein said energy absorbing mechanism comprises deformable portions (54, 55, 57, 58) having different deformation characteristics.

13. A seat according to any preceding claim, further comprising a chest clip (34) for releasably coupling together straps (20) within said upper body restraining strap configuration (35).

14. A seat according to any preceding claim, further comprising shaped shoulder pads provided within said upper body restraining strap configuration (35).

15. A seat according to any preceding claim, wherein said straps (20) cross between said upper body restraining strap configuration (35) and said lower body restraining strap configuration (36).

16. A seat according to claim 15, wherein said straps (20) cross at a rear surface of said seat.

17. A seat according to claim 4, further comprising rollers (60, 63) provided at said apertures (23, 24).

18. A harness configuration for a child seat, comprising a pair of harness straps (20), wherein each harness strap (20) extends down from an upper strap supply point (21) on said seat, **characterized in that**
each harness strap (20) engages a guide member (32) positioned part way down said seat from said upper strap supply point (21), and wherein each strap (20) extends further down the seat and engages with a buckle guide member (26) provided in a buckle coupling, before extending and being coupled to said seat at or adjacent a seat base (31).

19. A seat harness configuration for a child seat with a pair of harness straps (20), each harness strap extending down from an upper strap supply point (21) on said seat, **characterized by** comprising
a guide member (32) positioned part way down said seat for engaging said straps (20), said guide member (32) having an energy absorbing mechanism comprising a deformable member (50, 52, 54, 55, 56, 57), said deformable member (50, 52, 54, 55, 56, 57) deforming to absorb energy on sufficient loading from said straps (20).

20. A seat harness configuration for a child seat according to claims 18 or 19, wherein said harness straps (20) are guided to cross by said guide member (32).

21. A seat harness configuration according to claim 20, wherein said straps (20) cross at a rear surface of said seat.

22. A method of installing a harness for a child seat, comprising:
feeding a harness strap (20) from an upper supply point (21) down the front of said child seat;
guiding the strap (20) through a guide member (32) provided part way down the seat to form an upper restraining area (35) for restraining an upper body area of an occupant;
feeding the strap (20) further down the seat through a buckle (25) for going to the side of the seat to form a lower restraining area (36) for restraining a lower body area of an occupant.

23. A method according to claim 22, wherein a pair of said harness straps (20) are provided, said straps (20) being guided so as to cross by said guide member (32).

## Patentansprüche

1. Sitz zum Festhalten eines Kindes oder Babys in einem Fahrzeug, wobei der Sitz aufweist:
eine Rückenlehne (22);
einen Boden (31); und
eine Rückhaltegurt-Konfiguration, wobei die Rückhaltegurt-Konfiguration eine Rückhaltegurt-Konfiguration für den oberen Teil des Körpers (35) und eine Rückhaltegurt-Konfiguration für den unteren Teil des Körpers (36) aufweist;
**dadurch gekennzeichnet, dass** die Rückhaltegurt-Konfiguration für den unteren Teil des Körpers (36) obere Gurtzuführungspunkte (24) an der Rückenlehne (22) aufweist, die von oberen Gurtzuführungspunkten (21) der Rückhaltegurt-Konfiguration für den oberen Teil des Körpers (35) getrennt sind.

2. Sitz nach Anspruch 1, wobei die Rückhaltegurt-Konfiguration ein Paar von Gurten (20) aufweist, das sich von entsprechenden oberen Gurtzuführungspunkten (21) an einem oberen Abschnitt der Rückenlehne (22) zu einem unteren Abschnitt davon erstreckt, wobei die Gurte (20) um entsprechende Führungselemente (32), die an der Rückenlehne (22) vorgesehen sind, herumgeführt werden, wobei die Führungselemente (32) wie die oberen Gurtzuführungspunkte (24) für die Rückhaltegurt-Konfiguration für den unteren Teil des Körpers (36) fungieren.

3. Sitz nach Anspruch 2, wobei das Paar von Gurten (20) durch entsprechende Führungsöffnungen (26) in entsprechenden Gurtschlössern durchtritt, bevor es mit dem Sitz verbunden wird.

4. Sitz nach Anspruch 2 oder 3, wobei die Führungselemente (32) jeweils ein Paar von Öffnungen (23, 24) in der Rückenlehne (22) aufweisen, um zu ermöglichen, dass jeder Gurt (20) von der Vorderseite der Rückenlehne (22) zu der Rückseite der Rückenlehne (22) hindurchtritt, und dann wieder zurück zu der Vorderseite der Rückenlehne (22).

5. Sitz nach Anspruch 4, wobei die obere (23) des Paars von Öffnungen (23, 24) einen Ankerpunkt der Rückhaltegurt-Konfiguration für den oberen Teil des Körpers (35) aufweist, und die untere (24) des Paars von Öffnungen (23, 24) einen Gurtzuführungspunkt der Rückhaltegurt-Konfiguration für den unteren Teil des Körpers (36) aufweist.

6. Sitz nach einem der Ansprüche 2 bis 5, wobei die Führungselemente (32) jeweils eine Anordnung zum Ablenken des zugehörigen Gurts entlang eines Wegs aufweisen, der von einer Ebene weg gerichtet ist, in der sich die Rückenlehne (22) befindet oder die parallel dazu ist.

7. Sitz nach einem der Ansprüche 2 bis 6, wobei die Führungselemente (32) jeweils keilförmig sind.

8. Sitz nach einem der Ansprüche 2 bis 7, wobei die Führungselemente (32) im Querschnitt jeweils ein gebogenes oberes Profil und ein ebenes unteres Profil aufweisen.

9. Sitz nach Anspruch 8, wobei jedes obere Profil des Führungselements (32) ein zusammengesetzter Bogen ist, der sich aus Bögen mit größeren (40) und kleineren (41) Biegungen zusammensetzt, wobei der Bogen mit größerer Biegung (40) an oder neben dem Gurtzuführungspunkt (24) der Rückhaltegurt-Konfiguration für den unteren Teil des Körpers (36) ausgerichtet ist.

10. Sitz nach einem der Ansprüche 2 bis 9, wobei das Führungselement (32) einen energieaufnehmenden Mechanismus aufweist.

11. Sitz nach Anspruch 10, wobei der energieaufnehmende Mechanismus einen oder mehrere verformbare Abschnitte (50, 52, 54, 55, 56, 57) aufweist.

12. Sitz nach Anspruch 10 oder 11, wobei der energieaufnehmende Mechanismus verformbare Abschnitte (54, 55, 57, 58) mit unterschiedlichen Verformungseigenschaften aufweist.

13. Sitz nach einem der vorhergehenden Ansprüche, der des Weiteren einen Brustclip (34) aufweist zum lösbaren Zusammenkoppeln von Gurten (20) in der Rückhaltegurt-Konfiguration für den oberen Teil des Körpers (35).

14. Sitz nach einem der vorhergehenden Ansprüche, der des Weiteren geformte Schulterpolster aufweist, die in der Rückhaltegurt-Konfiguration für den oberen Teil des Körpers (35) vorgesehen sind.

15. Sitz nach einem der vorhergehenden Ansprüche, wobei die Gurte (20) sich zwischen der Rückhaltegurt-Konfiguration für den oberen Teil des Körpers (35) und der Rückhaltegurt-Konfiguration für den unteren Teil des Körpers (36) kreuzen.

16. Sitz nach Anspruch 15, wobei sich die Gurte (20) an der Rückseite des Sitzes kreuzen.

17. Sitz nach Anspruch 4, der des Weiteren Rollen (60, 63) aufweist, die an den Öffnungen (23, 24) vorgesehen sind.

18. Gurtkonfiguration für einen Kindersitz, die ein Paar von Gurten (20) aufweist, wobei sich jeder Gurt (20) von einem oberen Gurtzuführungspunkt (21) an dem Sitz nach unten erstreckt,
**dadurch gekennzeichnet, dass**
jeder Gurt (20) an einem Führungselement (32) angreift, das von dem oberen Gurtzuführungspunkt (21) um einen Teil nach unten an dem Sitz angeordnet ist, und wobei sich jeder Gurt (20) am Sitz weiter nach unten erstreckt und in ein Gurtschloss-Führungselement (26) eingreift, das in einem Gurtschloss vorgesehen ist, bevor er sich weiter erstreckt und an oder nahe dem Boden (31) mit dem Sitz verbunden wird.

19. Sitz-Gurtkonfiguration für einen Kindersitz mit einem Paar von Gurten (20), wobei sich jeder Gurt (20) von einem oberen Gurtzuführungspunkt (21) an dem Sitz nach unten erstreckt,
**dadurch gekennzeichnet, dass** sie aufweist:
ein Führungselement (32), das um einen Teil nach unten an dem Sitz angeordnet ist, um an den Gurten (20) anzugreifen, wobei das Führungselement (32) einen energieaufnehmenden Mechanismus mit einem verformbaren Element (50, 52, 54, 55, 56, 57) aufweist, wobei das verformbare Element (50, 52, 54, 55, 56, 57) so verformt wird, dass es bei ausreichender Belastung von den Gurten (20) Energie aufnimmt.

20. Sitz-Gurtkonfiguration für einen Kindersitz nach Anspruch 18 oder 19, wobei die Gurte (20) von dem Führungselement (32) so geführt werden, dass sie sich kreuzen.

21. Sitz-Gurtkonfiguration nach Anspruch 20, wobei die Gurte (20) sich an der Rückseite des Sitzes kreuzen.

22. Verfahren zum Installieren eines Gurtgeschirrs für einen Kindersitz, das umfasst:
Zuführen eines Gurts (20) von einem oberen Zuführungspunkt (21) an der Vorderseite des Kindersitzes nach unten;
Führen des Gurts (20) durch ein Führungselement (32), das um einen Teil nach unten an dem Sitz angeordnet ist, um einen oberen Rückhaltebereich (35) zum Festhalten des oberen Körperbereichs eines Insassens auszubilden;
Zuführen des Gurts (20) weiter nach unten an dem Sitz durch ein Gurtschloss (25), um an die Seite des Sitzes zu gehen, um einen unteren Rückhaltebereich (36) zum Festhalten des unteren Körperbereichs eines Insassens auszubilden.

23. Verfahren nach Anspruch 22, wobei ein Paar von Gurten (20) vorgesehen ist, wobei die Gurte (20) so geführt werden, dass sie von dem Führungselement (32) gekreuzt werden.

## Revendications

1. Siège pour maintenir un enfant ou un nouveau-né dans un véhicule, le siège comprenant :
un dossier de siège (22);
une base de siège (31) ; et
une configuration de sangle de maintien, ladite configuration de sangle de maintien comprenant une configuration de sangle de maintien de corps supérieure (35) et une configuration de sangle de maintien de corps inférieure (36) ;
**caractérisé en ce que** la configuration de sangle de maintien de corps inférieure (36) a des points de sortie de sangle supérieurs (24) sur le dossier de siège (22) qui sont séparés de points de sortie de sangle supérieurs (21) de la configuration de sangle de maintien de corps supérieure (35).

2. Siège selon la revendication 1, dans lequel la configuration de sangle de maintien comprend une paire de sangles (20) s'étendant à partir de points de sortie de sangle supérieurs (21) respectifs sur une partie supérieure du dossier de siège (22) jusqu'à une partie inférieure de celui-ci, les sangles (20) passant autour d'éléments de guidage (32) respectifs prévus sur le dossier de siège (22), les éléments de guidage (32) agissant comme lesdits points de sortie de sangle supérieurs (24) pour ladite configuration de sangle de maintien de corps inférieure (36).

3. Siège selon la revendication 2, dans lequel la paire de sangles (20) passent à travers des ouvertures de guidage (26) respectives dans des connecteurs à boucle respectifs avant d'être connectées au siège.

4. Siège selon la revendication 2 ou 3, dans lequel les éléments de guidage (32) comprennent chacun une paire d'ouvertures (23, 24) dans le dossier de siège (22), pour permettre que chaque sangle (20) passe d'une surface avant du dossier de siège (22) jusqu'à une surface arrière du dossier de siège (22), et ensuite revienne jusqu'à une surface avant du dossier de siège (22).

5. Siège selon la revendication 4, dans lequel l'une supérieure (23) de ladite paire d'ouvertures (23, 24) comprend un point d'ancrage de ladite configuration de sangle de maintien de corps supérieure (35) et l'une inférieure (24) de ladite paire d'ouvertures (23, 24) comprend un point de sortie de sangle de ladite configuration de sangle de maintien de corps inférieure (36).

6. Siège selon l'une quelconque des revendications 2 à 5, dans lequel lesdits éléments de guidage (32) comprennent chacun une formation pour dévier leur sangle associée le long d'un chemin s'écartant d'un plan contenant le ou étant parallèle au dossier de siège (22).

7. Siège selon l'une quelconque des revendications 2 à 6, dans lequel lesdits éléments de guidage (32) sont chacun en forme de coin.

8. Siège selon l'une quelconque des revendications 2 à 7, dans lequel lesdits éléments de guidage (32) ont chacun en coupe transversale un profil supérieur en arc et un profil inférieur plat.

9. Siège selon la revendication 8, dans lequel chaque profil supérieur d'élément de guidage (32) est une courbe composée, formée de courbes ayant une courbure plus grande (40) et une courbure plus petite (41), ladite courbe de plus grande courbure (40) étant orientée au niveau dudit ou adjacente audit point de sortie de sangle (24) de ladite configuration de sangle de maintien de corps inférieure (36).

10. Siège selon l'une quelconque des revendications 2 à 9, dans lequel ledit élément de guidage (32) a un mécanisme d'absorption d'énergie.

11. Siège selon la revendication 10, dans lequel ledit mécanisme d'absorption d'énergie comprend une ou plusieurs parties déformables (50, 52, 54, 55, 56, 57).

12. Siège selon la revendication 10 ou 11, dans lequel ledit mécanisme d'absorption d'énergie comprend des parties déformables (54, 55, 57, 58) ayant des caractéristiques de déformation différentes.

13. Siège selon une quelconque revendication précédente, comprenant en outre une boucle de poitrine (34) pour coupler ensemble de manière libérable des sangles (20) à l'intérieur de ladite configuration de sangle de maintien de corps supérieure (35).

14. Siège selon une quelconque revendication précédente, comprenant en outre des coussinets d'épaule conformés prévus à l'intérieur de ladite configuration de sangle de maintien de corps supérieure (35).

15. Siège selon une quelconque revendication précédente, dans lequel lesdites sangles (20) se croisent entre ladite configuration de sangle de maintien de corps supérieure (35) et ladite configuration de sangle de maintien de corps inférieure (36).

16. Siège selon la revendication 15, dans lequel lesdites sangles (20) se croisent au niveau d'une surface arrière dudit siège.

17. Siège selon la revendication 4, comprenant en outre des cylindres (60, 63) prévus au niveau desdites ouvertures (23, 24).

18. Configuration de harnais pour un siège pour enfant, comprenant une paire de sangles (20) de harnais, dans laquelle chaque sangle (20) de harnais s'étend vers le bas à partir d'un point de sortie de sangle supérieur (21) sur ledit siège, **caractérisée en ce que**
chaque sangle (20) de harnais s'engage avec un élément de guidage (32) positionné à mi-chemin vers le bas dudit siège à partir dudit point de sortie de sangle supérieur (21), et dans laquelle chaque sangle (20) s'étend plus vers le bas du siège et s'engage avec un élément de guidage de boucle (26) prévu dans un couplage à boucle, avant de s'étendre jusqu'audit et d'être couplée avec ledit siège au niveau d'une ou de manière adjacente à une base de siège (31).

19. Configuration de harnais de siège pour un siège pour enfant avec une paire de sangles (20) de harnais, chaque sangle de harnais s'étendant vers le bas à partir d'un point de sortie de sangle supérieur (21) sur ledit siège, **caractérisée en ce que** comprenant
un élément de guidage (32) positionné à mi-chemin vers le bas dudit siège pour engager lesdites sangles (20), ledit élément de guidage (32) ayant un mécanisme d'absorption d'énergie comprenant un élément déformable (50, 52, 54, 55, 56, 57), ledit élément déformable (50, 52, 54, 55, 56, 57) se déformant pour absorber une énergie en cas de charge suffisante provenant desdites sangles (20).

20. Configuration de harnais de siège pour un siège pour enfant selon la revendication 18 ou 19, dans laquelle lesdites sangles (20) de harnais sont guidées de manière à se croiser par ledit élément de guidage (32).

21. Configuration de harnais de siège selon la revendication 20, dans laquelle lesdites sangles (20) se croisent au niveau d'une surface arrière dudit siège.

22. Procédé d'installation d'un harnais pour un siège pour enfant, comprenant :
la sortie d'une sangle (20) de harnais d'un point de sortie supérieur (21) vers le bas sur l'avant dudit siège pour enfant ;
le guidage de la sangle (20) à travers un élément de guidage (32) prévu à mi-chemin vers le bas du siège pour former une zone de maintien supérieure (35) pour maintenir une zone de corps supérieure d'un occupant ;
la sortie de la sangle (20) plus vers le bas du siège à travers une boucle (25) pour aller jusqu'au côté du siège pour former une zone de maintien inférieure (36) pour maintenir une zone de corps inférieure d'un occupant.

23. Procédé selon la revendication 22, dans lequel une paire desdites sangles (20) de harnais sont prévues, lesdites sangles (20) étant guidées de manière à se croiser par ledit élément de guidage (32).
